# EUROPEAN PATENT SPECIFICATION

(11) **EP 2 372 197 B1**
(45) Date of publication and mention of the grant of the patent: **14.03.2012**
(21) Application number: 10425077.4
(22) Date of filing: 19.03.2010
(51) Int. Cl.: F16H 63/30, F16H 63/34

(54) **Device for selecting and displacing actuating elements of a gear-box for motor-vehicles**
Vorrichtung zum Auswählen und Versetzen von Betätigungselementen eines Getriebes für Kraftfahrzeuge
Dispositif pour la sélection et le déplacement d'éléments d'actionnement d'une boîte de vitesses pour véhicules à moteur

(43) Date of publication of application: 05.10.2011
(73) Proprietor: Fiat Powertrain Technologies S.p.A., 10135 Torino (IT)
(72) Inventor: Ghione, Massimiliano, 10135 Torino (IT)
(74) Representative: Notaro, Giancarlo

(56) References cited:
- EP-A2- 0 699 854
- DE-A1- 19 731 011
- FR-A- 1 047 025
- JP-A- 9 032 921

## Description

### Field of the invention

The present invention refers to a device for selecting and displacing actuating elements of a gear-box for motor-vehicles comprising a plurality of forward gears and a reverse gear, each associated to a respective actuation element, wherein the device comprises:
- selection mask having a pair of fingers opposite and facing each other and a pair of holes provided on said fingers and having coaxial axis defining a main axis,
- a first engagement hub inserted between said fingers in a coaxial manner to said through holes, said engagement hub having a radial relief arranged to be engaged with said actuation elements and rotating around said main axis,
- a control shaft inserted in said through holes and in said first engagement hub, said control shaft rotating around said main axis and being axially movable therealong, said control shaft further being rotatably connected to said first engagement hub,
- a first control element rotatably connected to said control shaft and actuatable to rotate said engagement hub around said main axis to selectively move each actuation element towards an extreme position thereof,
- a second control element operatively connected to said first engagement hub and actuatable to translate said first engagement hub and said selection mask along said main axis for selecting the actuation element into which engaging said radial relief, and
- a second engagement hub fitted on said control shaft, adjacent to said selection mask and translating therewith, said second engagement hub comprising a finger arranged to be engaged in the actuation element of a forward gear solely when said first engagement hub is translated to engage said radial relief in the actuation element of said reverse gear,
- wherein the second engagement hub comprises disengageable coupling means arranged to sequentially enable and disable a rigid connection in rotation between the finger of the second engagement hub and the control shaft when the abovementioned finger is engaged in the actuation element of said forward gear and the first engagement hub is turned in a direction of engagement of the reverse gear.

### General technical problem and description of the prior art

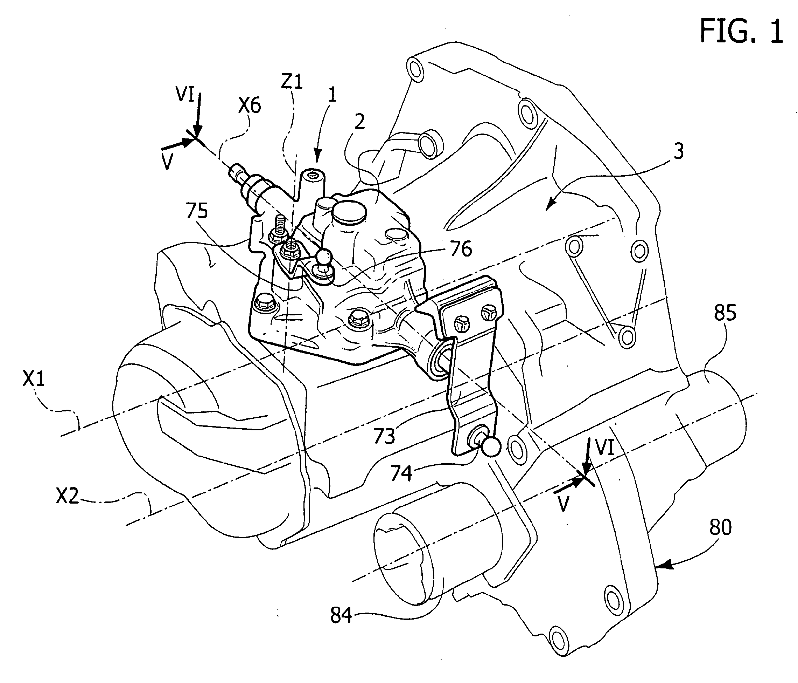

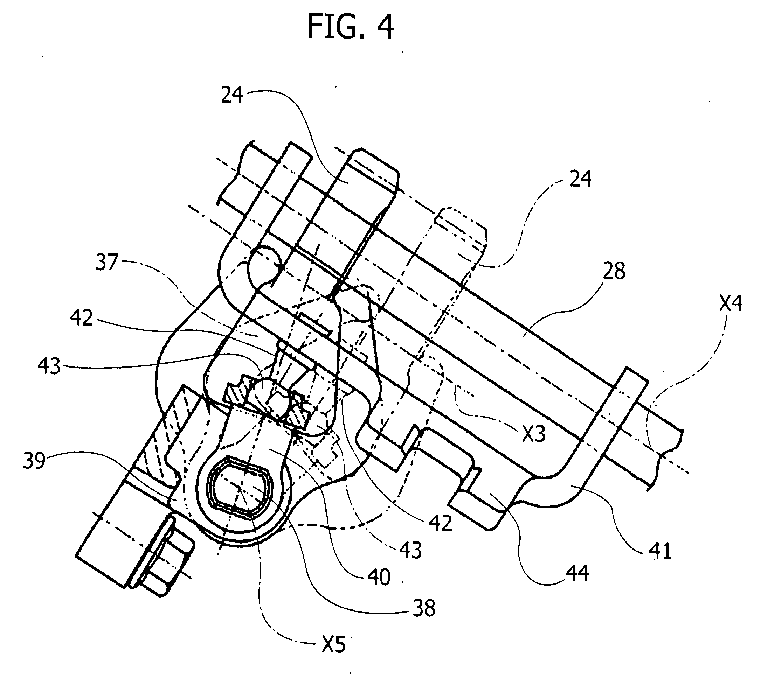

Referring to figures 1 to 5, reference number 1 indicates a device of known type for selecting and displacing actuating elements of a gear-box for motor-vehicles. The device 1 is accommodated in a casing which is installed on a case 3 of a gearbox 4.

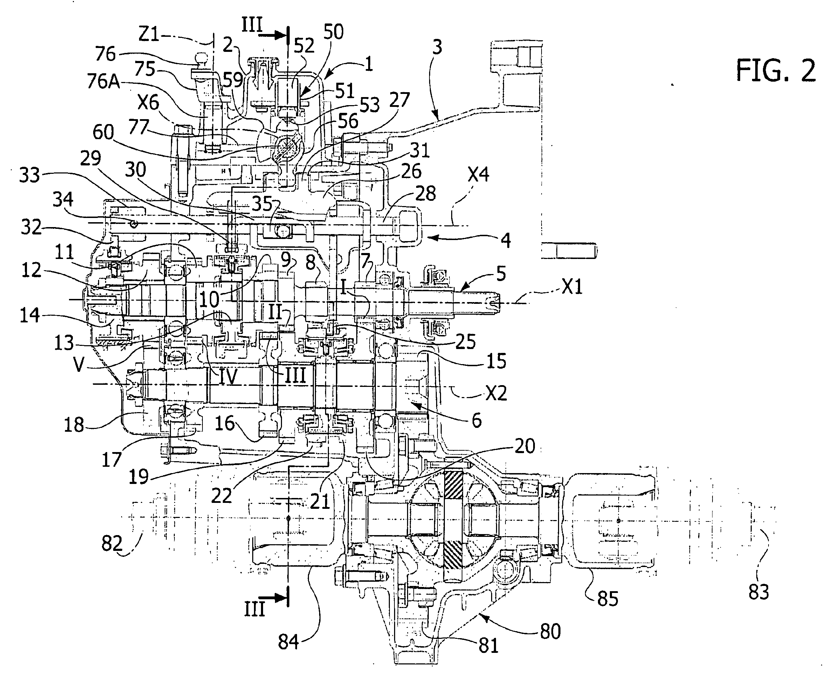

Referring to figure 2, the gearbox 4, illustrated herein in an exemplifying embodiment, comprises a primary shaft 5 and a secondary shaft 6 rotating around respective axes X1 and X2. Each shaft comprises a plurality of gear wheels mounted idle or rigidly connected in rotation thereto. The primary shaft 5 comprises three gear wheels 7, 8, 9 rigidly connected in rotation thereto and three gear wheels 10, 11, 12 mounted idle thereon.

Mounted between the wheels 10 and 11 is a first synchroniser 13 rigidly connected in rotation to the primary shaft 5. A second synchroniser 14, also rotatably connected to the shaft 5, is mounted adjacent to the wheel 12 and is associated thereto.

The secondary shaft 6 comprises four gear wheels 15, 16, 17, 18 rotatably connected thereto and two gear wheels 19, 20 mounted idle. Installed between the wheels 19, 20 is a third synchroniser 21 rotatably connected to the shaft 6 also bearing a gear wheel 22, rotatably connected thereto and to the shaft 6.

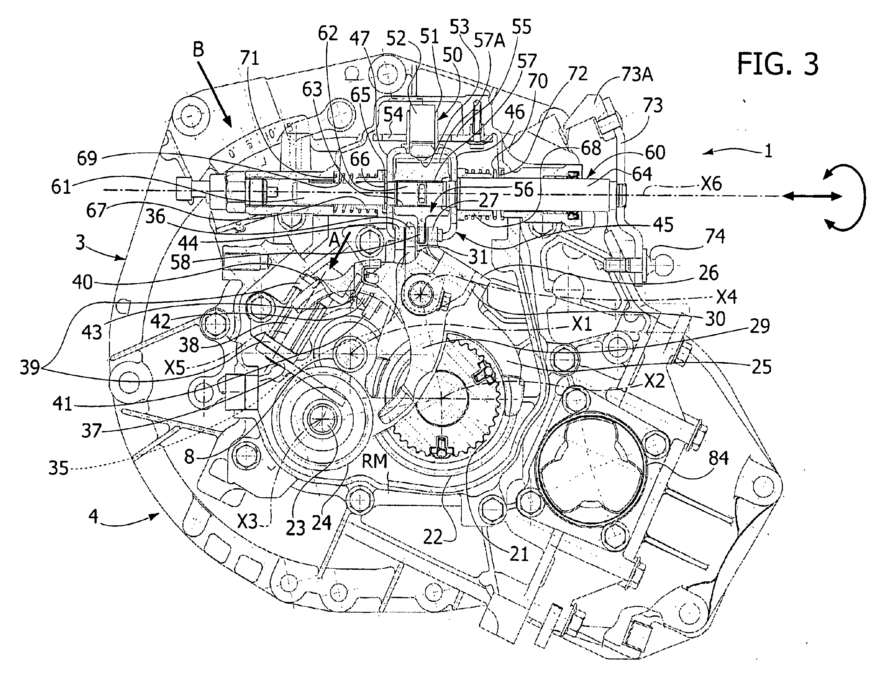

Referring to figure 3, the gear-box 4 further comprises a shaft 23 having an axis X3 parallel to axes X1 and X2 and bearing an idler wheel 24 axially movable therealong.

There are thus defined five gears corresponding to an equal number of forward gears of the gear-box 4 and a gear corresponding to a reverse gear of the gear-box 4 itself. In particular, the five gears of the gear-box 4 comprise:
- a first gear I defined by the wheels 7, 20 meshing with each other and corresponding to a first forward gear of the gear-box 4 (hereinafter indicated as "gear of the first", "first gear" or simply "first"),
- a second gear II defined by the wheels 9 and 19 meshing with each other and corresponding to a second forward gear of the gear-box 4 (hereinafter indicated as "gear of the second", "second gear" or simply "second"),
- a third gear III defined by the wheels 10 and 16 meshing with each other and corresponding to a third forward gear of the gear-box 4 (hereinafter indicated as "gear of the third", "third gear" or simply "third"),
- a fourth gear IV defined by the wheels 11 and 17 meshing with each other and corresponding to a fourth forward gear of the gear-box 4 (hereinafter indicated as "gear of the fourth", "fourth gear" or simply "fourth"), and
- a fifth gear V defined by the wheels 12 and 18 meshing with each other and corresponding to a fifth forward gear of the gear-box 4 (hereinafter indicated as "gear of the fifth", "fifth gear" or simply "fifth").

The gear corresponding to the reverse gear is instead indicated with RM (hereinafter indicated as " gear of the reverse" or simply "reverse gear") and is defined by the wheels 8 and 22 and by the idler wheel 24 when the latter meshes with the abovementioned wheels. As a matter of fact, the gear wheels 8 and 22 do not mesh directly with each other, but they require that the idler wheel 24 be axially moved in such a manner to mesh with both of them in order to attain the transmission of motion from one wheel to the other or vice versa.

Referring to figures 2, 3, a first fork 25 is engaged on the first synchroniser 21 and it is integral with a first actuation element 26 comprising a fork-shaped end 27. The first actuation element 26 is mounted sliding on a shaft 28 borne by the case 3 and movable along an axis X4 thereof.

A second fork 29 is engaged on the first synchroniser 13 and it is integral with a second actuation element 30, also mounted sliding on the shaft 28 and comprising a fork-shaped end 31 substantially identical to the end 27 and adjacent and aligned thereto(figure 3).

A third fork 32 is rigidly connected to the shaft 28 by means of a hub 33 and a pin 34. Engaged on the same shaft 28 is a third actuation element 35 operatively connected to the fork 32. The actuation element 35 comprises a fork-shaped end 36, substantially identical to the fork-shaped ends 27, 31, adjacent to the end 31 and aligned thereto.

A fourth fork 37 is engaged on the idler wheel 24 and rotates around an axis X5. The fork 37 is rotatably connected to a pin 38 coaxial to the axis X5 and borne by a fork-shaped bracket 39 fixed onto the case 3. The pin 38 is also rotatably connected to a lever 40 in turn connected to a fourth actuation element 41 by means of a pin 42 having a ball-shaped head 43 engaged into the lever 40. Similarly to the other actuation elements, also the actuation element 41 comprises a fork-shaped end 44 adjacent to the fork-shaped end 36 and aligned thereto.

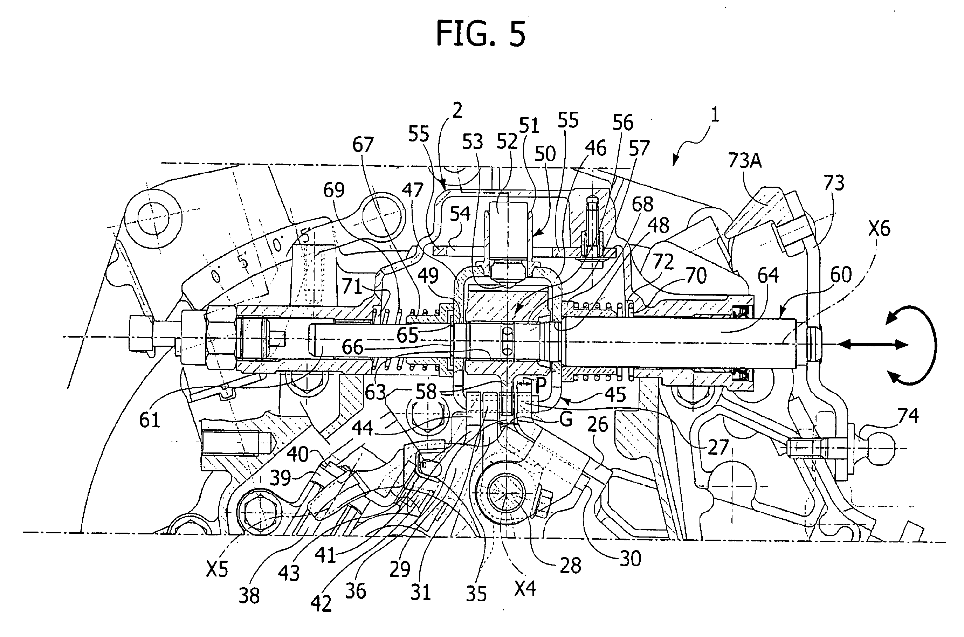

Referring to figure 5, the actuation device 1 comprises a selection mask 45 comprising two fingers 46, 47 opposite and facing each other. The fingers 47 are substantially L-shaped, they converge towards each other and they have ends separated by a distance G. The distance G has similar dimensions but slightly larger with respect to a thickness P of the fork-shaped ends 27, 31, 36, 44. A pair of through holes 48, 49 is provided on the fingers 46, 47 (a hole on each of the fingers).

Furthermore, fixed on the selection mask 45 is a stud 50 comprising a hub 51 containing a pin 52 having a head withholding a retractable ball 53 projecting between the fingers 46, 47. The stud 50 is engaged in an eyelet 54 provided in a plate 55 fixed to the casing 2.

The plate 55 is fixed in translation and in rotation with respect to the casing 2 and the oblong-shaped eyelet 54 extends in the direction of the main axis X6.

The device 1 further comprises a first engagement hub 56 substantially cylindrical-shaped. The first engagement hub 56 is inserted between the fingers 46, 47 in a manner coaxial to the through holes 48, 49 and comprises a female splined coupling 57 coaxial with respect to the holes 48, 49 and to the main axis X6.

The first engagement hub 56 comprises a radial relief 58 arranged to be engaged with the actuation elements 26, 30, 35, 41, particularly with the respective fork-shaped ends 27, 31, 36, 44. The radial relief 58 is arranged between the two fingers 46, 47 in the area that separates the ends thereof, and thus it has a thickness slightly smaller than the distance G.

The first engagement hub 56 further comprises a pair of radial shoulders 59 substantially orthogonal with respect to the radial relief 58 and a groove 59A with cylindrical wall wherein the retractable ball 53 is engaged.

The device 1 comprises a control shaft 60 including a first section 61, a second section 62 bearing a male splined coupling 63 and a third section 64. The sections 61 and 64 are end sections of the shaft 60 and have different diameter, in particular the diameter of the section 61 is smaller than the diameter of the section 64.

The control shaft 60 is coaxial to the axis X6 and is inserted into the through holes 48, 49 and into the hub 56. In particular, the male splined coupling 63 is engaged in the female splined coupling 57 of the latter. The control shaft 60 is axially blocked with respect to the selection mask 45 due to the section 64 having a larger diameter with respect to the through holes 48, 49 and due to an elastic ring 65 engaged in an annular groove 66 on the first section 61.

The control shaft 60 is furthermore rotatably supported around the axis X6 within the casing 2, and it is also axially movable along the axis X6.

Two bushings 67, 68 are respectively fitted onto the sections 61, 64 and they are kept in abutment against, respectively, finger 47 and finger 46 by springs 69, 70 coaxial to the axis X6, fitted on the control shaft 60 and comprised between the corresponding bushings and recesses 71, 72 provided on the casing 2.

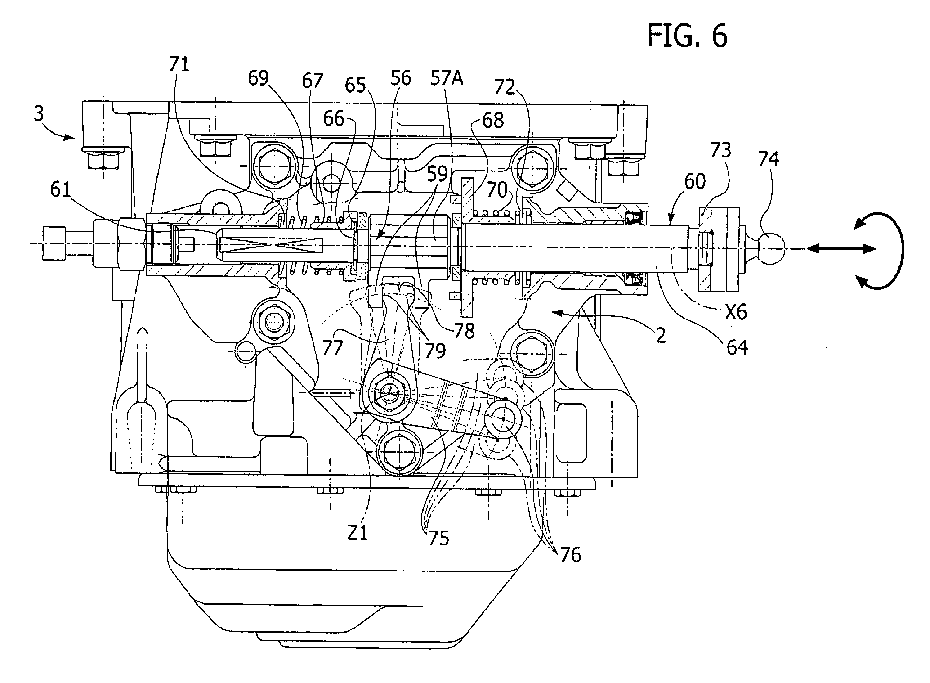

Referring to figures 5, 6, the device 1 comprises a first control element 73, particularly a lever, rotatably connected to the control shaft 60 and rotating around the axis X6. Fixed onto the control element 73 is a pin having a ball-shaped head 74, arranged for the connection to a metal cable of the Bowden type (in turn connected to an actuation lever inside the motor-vehicle).

The device 1 further comprises a second control element 75, particularly a lever, rotating around an axis Z1 orthogonal to the axis X6.

The control element 75 comprises a pin having a ball-shaped head 76 connectable to a Bowden cable in turn connected to the actuation lever in the motor-vehicle. Referring in particular to figures 2, 6, the control element 75 is rotatably connected, by means of a pin 76A, to a lever 77, itself rotating around the axis Z1 and having an end 78 with domed sides 79 which are engaged between the radial shoulders 59 of the first engagement hub 56.

In addition, the following components are connected to the gear-box 4:
- a clutch, rotatably connected to the primary shaft 5 (not illustrated) which receives the motion from an engine of the motor-vehicle (also not illustrated), and
- a differential 80 comprising a crown gear 81 meshing with a gear wheel 15 of the secondary shaft 6.

In addition, two semi-axles 82, 83 are connected to the differential 80 by means of respective constant-velocity joints 84, 85.

The operation of the gear-box 4 is as follows.

The gear-box 4 is arranged for transmitting motion from the primary shaft 5 to the differential 80 through the secondary shaft 6 and with variable transmission ratio. The variation of the transmission ratio is obtained by actuating the forks 25, 29, 32 through the respective actuation elements 26, 30, 35 associated to the gears, respectively, I-II, III-IV, V.

Thus, they control the engagement of the forward gears of the gear-box 4. The engagement of the reverse gear (RM) is attained by actuating the actuation element 41 which causes an axial displacement of the wheel 24 along the shaft 23.

The forks cause an axial displacement of corresponding sleeves of the synchronisers on which they are engaged for connecting in rotation the corresponding idler wheels with the shaft on which the latter are mounted.

The device 1 is arranged for the actuation of single actuation elements through the radial relief 58 which may be selectively engaged in the fork-shaped ends 27, 31, 36, 44.

The actuation elements 26, 30, 35, 41 have the respective fork-shaped ends 27, 31, 36, 44 parallel to and aligned with each other. Each actuation element and each fork-shaped end is associated to gears which belong to the same engagement plane.

In the present description, "engagement plane" is defined as a plane along which each actuation element 26, 30, 35, 41 is movable. In the example illustrated in the figures, the gearbox 4 has four engagement planes. In the present description, the expression "selection motion" is used to define a movement of the first hub 56 aimed at selecting the engagement plane to which the fork-shaped end into which the radial relief 58 is to be engaged belongs. Furthermore, the expression "engagement motion" is used to define a movement of the first engagement hub 56 aimed at displacing - in a direction parallel to the axis X6 - one of the actuation elements 26, 30, 35, 41 towards an extreme position thereof.

The selection and engagement motions are controlled, respectively, by the second control element 75 and by the first control element 73. In particular, the first control element 73 is actuatable in rotation around the axis X6 to cause a corresponding rotation of the control shaft 60 and of the first engagement hub 56 (due to the coupling between splined couplings 63, 57) to move an actuation element towards an extreme position thereof, i.e. a position such that the synchroniser associated thereto connects in rotation an idle gear wheel to the shaft on which it is mounted. In the absence of an action on the control element 73 the engagement hub 56 is also maintained in neutral position by the coupling, disengageable upon rotation thereof, between the groove 57A and the retractable ball head 53.

It is thus clear that each actuation element has a number of extreme positions depending on the number of wheels associated to a single synchroniser. In particular, the actuation elements 26, 30, have two extreme positions each corresponding, respectively, to the synchronisation of gear I and gear II and to the synchronization of gear III and gear IV.

The actuation elements 35, 41 have only one admissible extreme position corresponding, respectively, to the synchronisation of the gear V and to the movement of the wheel 24 along the shaft 23 with the aim of meshing it with the wheels 8, 22.

The second control element 75 is instead actuatable in rotation around the axis Z1 to cause, through the lever 77 engaged between the radial shoulders 59, a translation of the first engagement hub 56 and of the selection mask 45 along the axis X6. In such manner, it is possible to select the engagement plane, i.e. the actuation element into which the radial relief 58 is to be engaged. The selection mask 45 translates together with the control shaft but does not rotate due to the stud 50 which is engaged into the eyelet 54.

In addition, it should be observed that, regardless of the position in which the selection motion ends, the radial relief 58 may displace one and only one actuation element. As a matter of fact, also the fingers 46, 47 are engaged in the fork-shaped ends 27, 31, 36, 44 in a manner depending on the position of the mask 45.

Due to the relation existing between the distance G and the thickness P, only one fork-shaped end at a time may move between the fingers 46, 47, thus preventing any displacement of the actuation elements having fork-shaped ends belonging to non-selected engagement planes. The fingers 46, 47 substantially block the motion of the actuation elements in whose fork-shaped ends they are engaged, solely allowing the motion of the actuator whose fork-shaped end is engaged with the radial relief 58, thus being positioned in correspondence with the separation area between the ends of the fingers 46, 47.

Gearboxes having an actuation device of the known type, such as the device 1, however have a drawback related to the engagement of the reverse gear.

The reverse gear RM is the sole, among the gears of the gear-box 4 that does not have wheels always meshing with each other because it is arranged to attain an inversion of the direction of the motion transmitted to the semi-axles 83, 82 and to the wheels of the motor-vehicle.

In particular, when engaging the reverse gear it is not infrequent to hear a screeching noise due to problems encountered when meshing the wheel 24 with wheels 8, 22.

As a matter of fact, by engaging the reverse gear when the motor-vehicle is stationary there may be a difference of rotational speed between the shafts 5, 6. In particular, the secondary shaft 6 is stationary given that it is connected, through the differential 80, to the wheels of the motor-vehicle, which are stationary.

The primary shaft 5, however, may not be completely stationary due to various reasons, for example due to reasons related to inertia thereof. This implies that the wheel 8, rotatably connected to the shaft 5, is moving and thus it does not provide ideal conditions for meshing with wheel 24.

Such meshing occurs axially and thus it is mandatory for wheels 22, 8 to be perfectly stationary.

Such problem was tackled and overcome in various ways in the prior art. For example, document US 6,736,020 B2 illustrates an actuation device for the actuation elements of a gear-box in which, in addition to the first engagement hub, there is provided a second engagement hub fitted onto the control shaft and arranged to be engaged in the actuation element of a forward gear when the first engagement hub performs a selection motion aimed at engaging a radial relief thereof with the actuation element of the reverse gear.

In such manner, when the engagement motion to engage a reverse gear is commanded, the actuation element of the abovementioned forward gear and the synchroniser associated thereto are moved to a condition of incipient synchronization due to the second engagement hub. Evidently the predominant factor is the absence of the rotational motion of the secondary shaft, which implies that the gear wheels involved by the incipient synchronisation must have a null rotational speed. The action of the synchroniser is such that it equalizes the rotational speed of the shaft and of the idler wheel mounted thereon, i.e., in this case, it causes a braking of the primary shaft.

Thus in such manner both the primary and secondary shafts are stationary and it is possible to engage the reverse gear without inconveniences. However, the solution described in the abovementioned document is quite complex and requires a specific machining of the surface of the second engagement hub and of the actuation element of the forward gear in which it is engaged, in such a manner to prevent the simultaneous engagement of a forward gear and a reverse gear.

An analogous problem is tackled and resolved in document DE 197 31 011 A1. Also provided for in this case is a second engagement hub having a finger functionally equivalent to the radial relief 58 associated to elastic means. However, this system requires an additional and dedicated machining on the actuation element on which the second engagement hub is engaged.

Furthermore, document JP-A-9032921 discloses a device according to the preamble of claim1.

### Object of the invention

The object of the present invention is to overcome the problems of the prior art previously described. In particular, the object of the present invention is that of providing a device for the actuation of actuating elements of a gear-box capable of eliminating the problems of the reverse gear engagement previously illustrated and capable at the same time of being installed on any gear-box without requiring modifications to the latter.

### Summary of the invention

The object of the present invention is achieved by a device according to claim 1.

### Brief description of the drawings

The invention will now be described with reference to the attached drawings, provided purely by way of non limiting example, wherein:
- figure 1, previously described, illustrates a perspective view of an actuation device of the known type installed on a gear-box,
- figure 2, previously described, illustrates a sectional view according to line II-II of figure 1,
- figure 3, previously described, illustrates a sectional view along line III-III of figure 2 and with some components removed for clarity,
- figure 4, previously described, illustrates a view according to arrow A of figure 3,
- figure 5, previously described, is an enlarged sectional view according to arrow B of figure 3,
- figure 6, previously described, is a sectional view according to line VI-VI of figure 1,
- figure 7 is a sectional view corresponding to figure 5 but illustrating an actuation device according to the present invention,

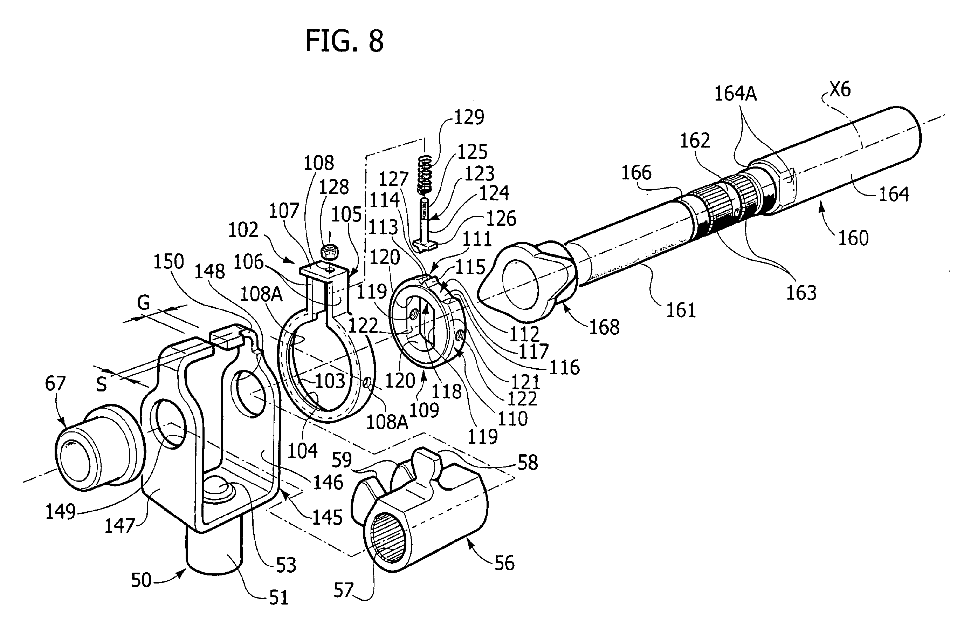

- figure 8 is an exploded perspective view of some components of the actuation device according to the present invention, and
- figures 9 to 14 illustrate an operative sequence of the actuation device according to the present invention and comprise, each, a portion A. illustrating a sectional view according to line W-W of figure 7, and a portion B. illustrating a sectional view, with some components removed for clarity, according to respective lines IX-IX, X-X, XI-XI, XII-XII, XIII-XIII, XIV-XIV.

### Detailed description of the invention

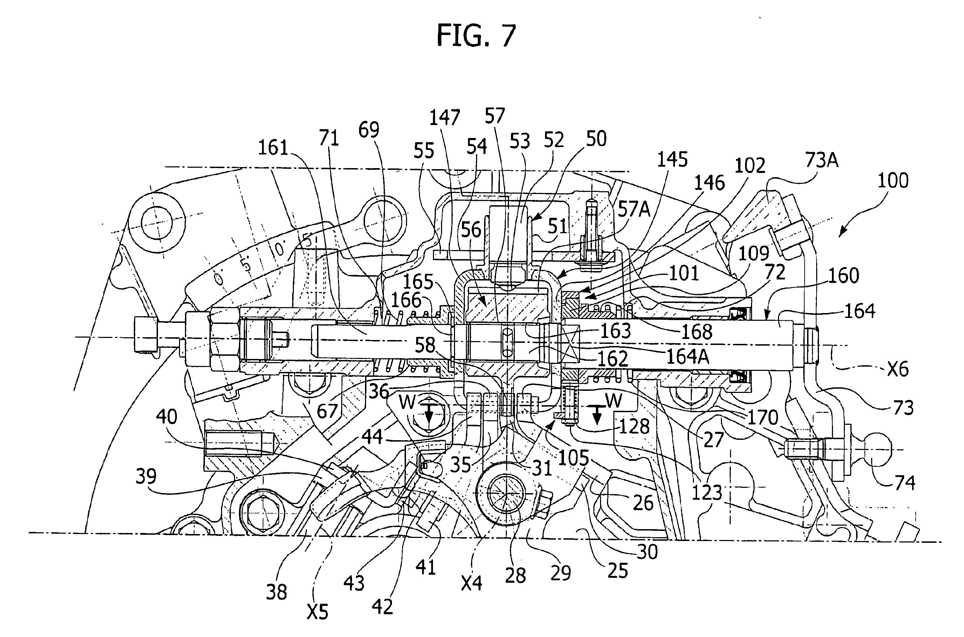

In figure 7, an actuation device according to the present invention is indicated with 100. The components identical to those of the device 1 are indicated with the same reference number and thus they will not be described again.

The device 100 comprises, in addition to the components previously described, a second engagement hub 101 fitted onto the control shaft 60 and adjacent to a selection mask 145 which replaces the selection mask 45 of the device 1.

The second engagement hub 101 comprises an external annular element 102 having an internal track 103 and a collar 104. The external annular element 102 also comprises a finger 105 including two guide sides 106 and a head 107 projecting axially and directed towards the collar 104 and comprising a through hole 108. Lastly, the external annular element 102 comprises a pair of radial through holes 108A coaxial with respect to each other.

The second engagement hub 101 further comprises an internal annular element 109 comprising, on an external cylindrical surface 110 thereof, a first and a second recess 111, 112. Recess 111 has an angular extension smaller than recess 112 and it comprises a pair of inclined and incident sides 113, 114.

The recess 112 comprises two inclined sides 115, 116 separated by a cylindrical surface portion 117. The internal annular element 109 further comprises a central through cavity 118 having two flat and parallel walls 119 and two opposite cylindrical walls 120. The internal annular element 109 also comprises a circumferential recess 121 suitable for coupling with the collar 104 of the external annular element 102. Lastly, a pair of threaded through holes 122 are provided on the surface 110 and they face the flat walls 119 of the cavity 118.

The internal annular element 109 is inserted into the annular element 102 in such a manner that the circumferential recess 121 abuts against the collar 104 and that the cylindrical surface 110 be in contact with the track 103.

In such configuration, the holes 108A and 122 are coaxial with respect to each other. A disengageable coupling element 123 is inserted into the annular element 102. The coupling element 123 comprises a stem 124 having a threaded end 125 and a head 126 projecting radially with respect to the stem 124 and comprising a prismatic relief 127 whose shape is complementary to the recess 111.

The coupling element 123 is arranged between the sides 106 in such a manner that the stem 124 is engaged in the hole 108 and the threaded section 125 protrudes therefrom engaging a nut 128 which is set in abutment against the head 107. The stem 124 and the threaded section 125 are slidingly engaged in the hole 108.

An elastic element 129 is also arranged between head 126 and head 107 and cooperates with the coupling element 123.

The head 126 of the coupling element 123 is instead engaged with the internal annular element 109.

In particular, as it will be described further, the prismatic relief 127 is arranged for engaging, alternatively, in the recess 111 and in the recess 112.

The selection mask 145 has a structure that is analogous to the selection mask 45, and comprises two substantially L-shaped fingers 146, 147, opposite and facing each other. The fingers 146, 147 simultaneously move towards each other and have ends separated by distance G, having similar dimensions but slightly greater with respect to the thickness P of the fork-shaped ends 27, 31, 36, 44. Each of the fingers 146, 147 is provided with a respective through hole 148, 149. The holes 148, 149 are coaxial with respect to each other and arranged coaxially with respect to the axis X6. The finger 146 further comprises a recess 150 provided in proximity to an end thereof. The fingers 146, 147 have ends separated by the distance G described above.

The first engagement hub 56 is inserted between the fingers 146, 147 in such a manner that the female splined coupling 57 is coaxial with respect to the holes 148, 149.

The device 100 further comprises a control shaft 160, replacing the control shaft 60, comprising a first section 161, a second section 162 provided on which is a male splined coupling 163 and a third section 164 comprising two parallel and opposite flattenings 164A.

The control shaft 160 is inserted into a series of components comprising the second engagement hub 101, the selection mask 145, particularly the holes 149, 148 thereof, and the first engagement hub 56.

In particular, the control shaft 160 is inserted along the axis X6 in such a manner to engage the second engagement hub 101 on section 164, the first engagement hub 56 on section 162, particularly on the male splined coupling 163 and the selection mask 145 on sections 161 and 162.

The flattenings 164A are shaped in such a manner to be coupled with the cavity 118 and attain abutment against the walls 119. Thus, the internal annular element 109 is permanently connected in rotation to the control shaft 160. A pair of threaded dowels (not illustrated) is inserted into the holes 108A and fastened onto the flattenings 164A by screwing into the threaded holes 122 for holding the internal annular element 109 against the flattenings 164A of the control shaft 160 further.

The first engagement hub 56 is also permanently connected in rotation to the shaft 160, due to the coupling between the profiles 57, 163.

The control shaft 160 is axially blocked with respect to the selection mask 145 due to the section 164 having a larger diameter with respect to the through holes 148, 149 and due to an elastic ring 165 engaged into an annular groove 166 on the first section 61.

The hub 67 and a second hub 168 are fitted onto the shaft 160, respectively on the sections 161, 164. It should be observed that the hub 168 is axially shorter with respect to the hub 68 of the device 1 because it must compensate the thickness of the second engagement hub interposed between itself and the selection mask 145.

Referring to figure 7, the control shaft 160 is rotatably connected to the first control element 73 while the first engagement hub is operatively connected to the second control element 75 through the lever 77 which is engaged between the radial shoulders 59.

The operation of the device 100 is as follows.

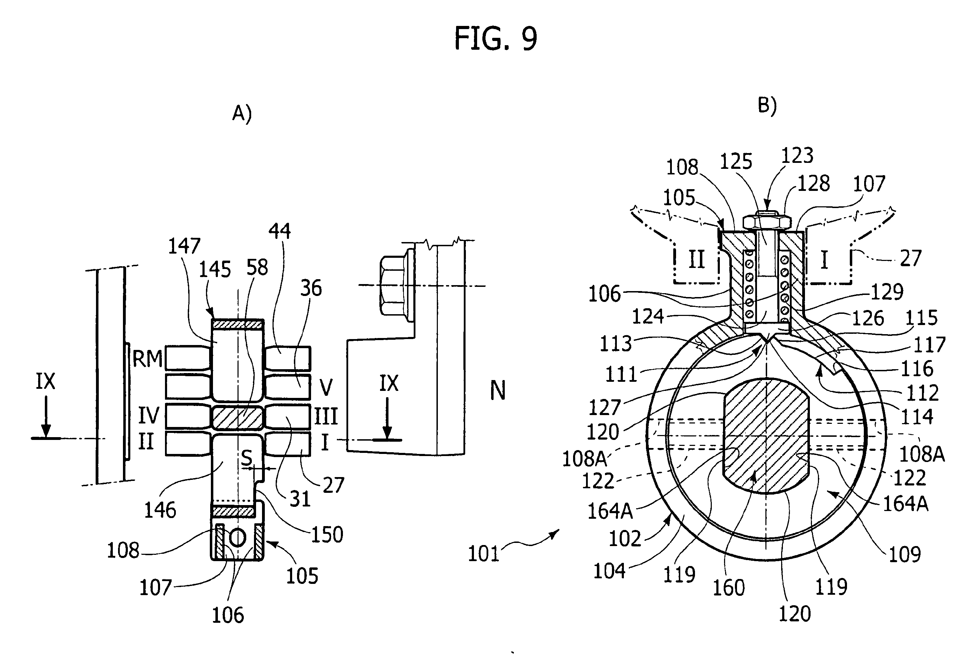

With reference to figures 9 to 14, each of them is divided into a portion A and a portion B. Portion A illustrates, in section, the relative position between the fork-shaped ends 27, 31, 36, 44 of the actuation elements 26, 30, 35, 41 and a group of components comprising the selection mask 145, the radial relief 58 of the first engagement hub 56 and the finger 105 of the second engagement hub 101. Furthermore, in each portion A on opposite sides of each fork-shaped end 27, 31, 36, 44, there is indicated the gear which is enabled for the transmission of motion when they are moved towards the corresponding side.

In figure 9, portion A illustrates a neutral position, indicated with N, of the gear-box 4 and functionally also of the device 100.

With reference to portion B of figure 9, while the selection mask 145 and the radial relief 58 are engaged in the fork-shaped ends 27, 31, 36, 44 even in neutral position, the second engagement hub 101, particularly the finger 105, is not engaged with any fork-shaped end, thus it is not engaged with any actuation element.

Furthermore, in such configuration the coupling element 123 is engaged, through the prismatic relief 127, in the recess 111 of the internal annular element 109, thus making the latter rotatably connected to the external annular element 102.

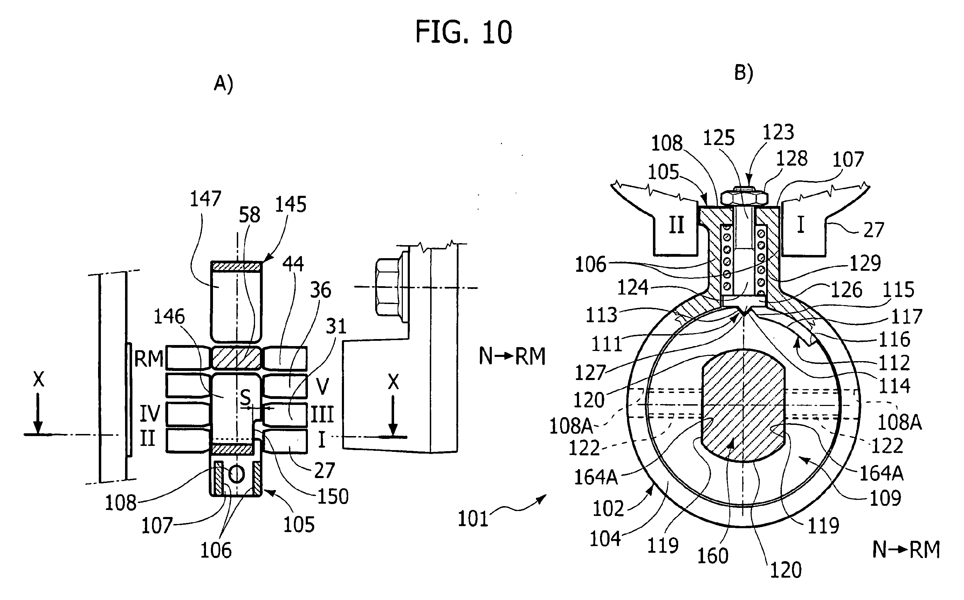

Referring to figure 10, the components of the device 100 are illustrated in end-of-selection position. This is the result of an axial translation of the control shaft 160, of the selection mask 145, of the first and second engagement hubs 56, 101 in an axial direction along the axis X6 to bring the radial relief 58 in correspondence with the fork-shaped end 44 associated to the the reverse gear RM.

The axial movement of the control shaft 160 is obtained due to the rotation of the second control element 75 around the axis Z1.

Referring to portion B of the figure 10, the second engagement hub 101 has a configuration identical to that illustrated in portion B of figure 9, with the sole exception regarding the axial position thereof, which is such that the finger 105 is engaged in the fork-shaped end 27 associated to the gears I-II.

Referring to figure 7, it should be observed that the axial distance between the finger 105, particularly the head 107 thereof, and the radial relief 58 must be greater than the overall thickness of two adjacent fork-shaped ends, in order to prevent the simultaneous engagement of several gears at positions of the radial relief 58 different from the one corresponding to the selection of the reverse gear.

In particular, the fork-shaped end 27 associated to the gears I/II and the fork-shaped end 44 associated to the reverse gear RM are at extreme positions of the sequence of fork-shaped ends 27, 31, 36, 44 and separated by the two fork-shaped ends 31, 36. An essential condition in order to avoid simultaneous engagements in positions different from that of reverse gear selection is thus that the distance be greater than the overall thickness of the two fork-shaped ends 31, 36.

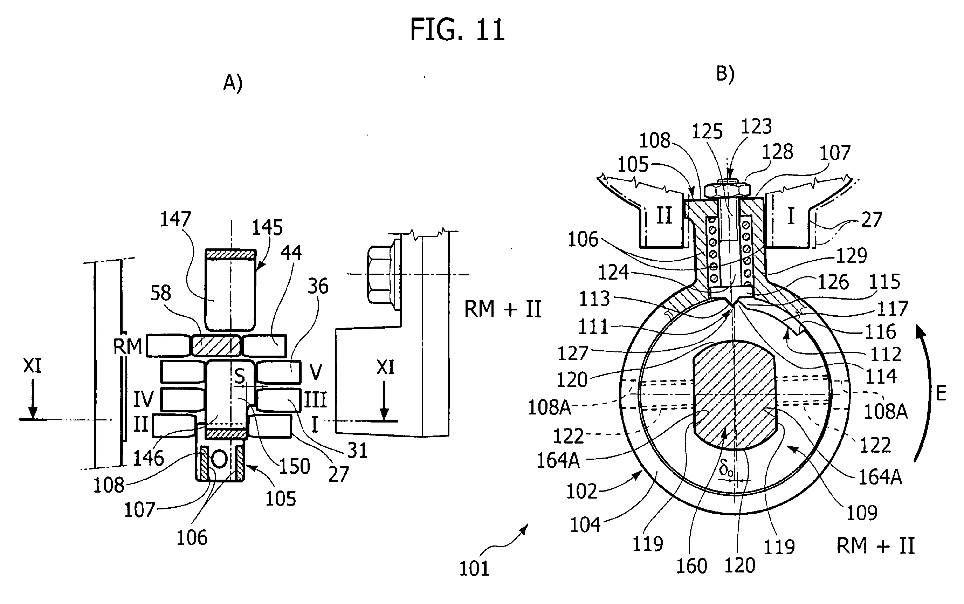

Illustrated in figure 11 is a condition of start of simultaneous engagement of the reverse gear and the second gear. This occurs due to rotation in a direction E of the control shaft 160 imparted through the first control element 73.

The simultaneous rotation of the radial relief 58 and the finger 105 of the second engagement hub 101 is guaranteed by the fact that the coupling element 123 is engaged in the recess 111 of the internal annular element 109.

In particular, being the shape of the prismatic relief 127 complementary to that of the recess 111, there is no possibility of relative rotational movement between the internal annular element 109, permanently connected in rotation to the control shaft 160, and the external annular element 102.

Nevertheless, it should be observed that the simultaneous translation of the fork-shaped ends 27, 44 associated, respectively, to the gears I/II and RM, is possible due to the recess 150 provided on the finger 148 of the selection mask 145.

In fact, as previously described regarding the device 1, the fingers 146, 147 prevent the displacement of the actuation elements whose fork-shaped ends are not engaged by the radial relief 58, while they solely allow the motion of the radial relief 58 and of the fork-shaped end in which it is engaged in the space that separates them.

The recess 150, instead, leaves a minimum possibility of movement to the fork-shaped end 27: in particular the latter can move in the direction which would cause an engagement of the second (gear II) at most by a distance equivalent to S, depth of the recess 150 and corresponding to an angle δ₀, taking the position of the axis of the hole 108 in the neutral position as reference.

The distance S is selected in such a manner that the movement of the fork-shaped end 27 has an extension such that the actuation element 26 commands a movement of the synchroniser 21 associated thereto bringing it to conditions of incipient synchronisation, i.e. conditions wherein the synchronization action on the gear II is in progress and not yet complete. This is sufficient to reduce the rotational speed of the primary shaft 5, which progressively decreases until it reaches null (synchronisation completed).

At this point, it is necessary to complete the operation of engagement of the reverse gear without simultaneously completing that which would lead to an engagement of the second, clearly with the aim of preventing the simultaneous engagement of a forward gear and a reverse gear.

In particular it is necessary to disable the connection in rotation between the finger 105 and the control shaft 160, i.e., in an equivalent manner, between the external annular element 102 and the annular element 109. For such purpose, the coupling element 123 may be disengaged from the recess 111 by simply engaging the reverse gear. As a matter of fact, while the fork-shaped end 44 may continue its movement unhindered, the fork-shaped end 27 is limited in its excursion by the depth S of the recess 150.

Upon exhaustion of such possibility of movement, the fork-shaped end 27 does not have any possibility of movment as well as the finger 105 of the external annular element 102. However, the rotation in the direction E of the control shaft 160 proceeds to complete the engagement of the reverse gear, hence causing the surpassing of the side 114 of the recess 111 by the relief 127, which thus accommodates in the recess 112.

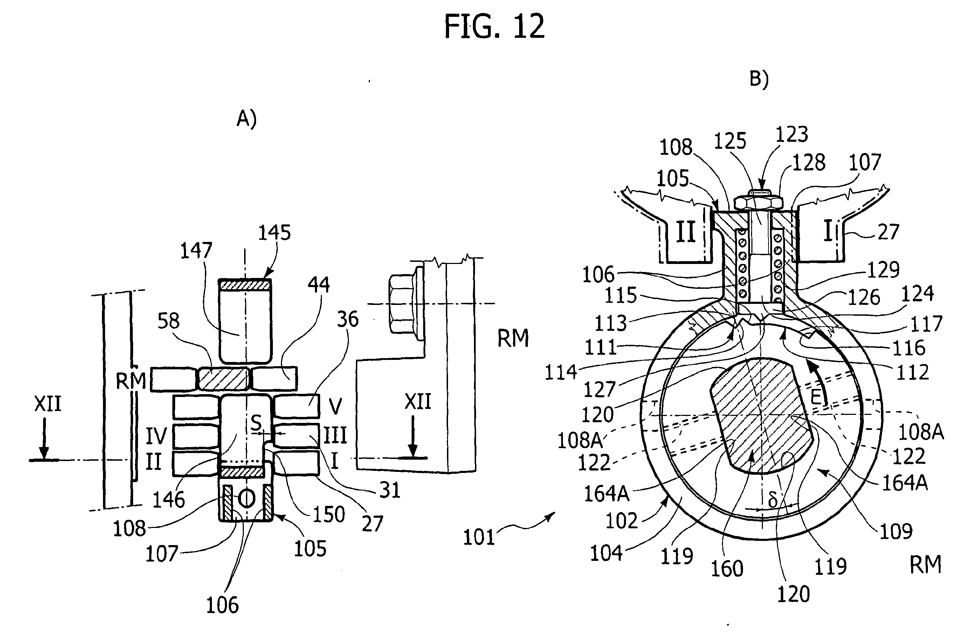

The surpassing of the side 114 is clearly allowed by the compression of the elastic element 129 and by the sliding of the stem 124 within the hole 108. In this way, with reference to figure 12, the fork-shaped end 27 and the actuation element 26 return to a neutral position (corresponding, for example, to that taken in a neutral condition) while the fork-shaped end 44 and the actuation element 41 are at an extreme position corresponding to the complete engagement of the reverse gear.

Taking the axis of the hole 108 and the intersection line between the sides 113 and 114 as references, the internal annular element 109 and the external annular element 102 have a relative angular position which is displaced by an angle δ with respect to the relative position acquired initially in neutral conditions and illustrated in figure 9, 10. The finger 105, together with the external annular element 102, is in a position corresponding to that acquired in the neutral conditions of the gearbox 4, while the internal annular element 109 is rotated by the same angle of rotation imparted to the control shaft 160 through the control element 73. Substantially, the rotational connection between the finger 105 and the control shaft 160 was disabled and the external annular element 102 rotates freely with respect to the element 109 by the entire angle δ.

It should be observed that the angular width of the recess 112 is much greater than the maximum displacement admissible between the external annular element 102 and the internal annular element 109. In such manner, the displacement value solely depends on the coupling of the internal annular element 109 with the control shaft 160 and the coupling of the external annular element 102, particularly of the finger 105, with the fork-shaped end 27.

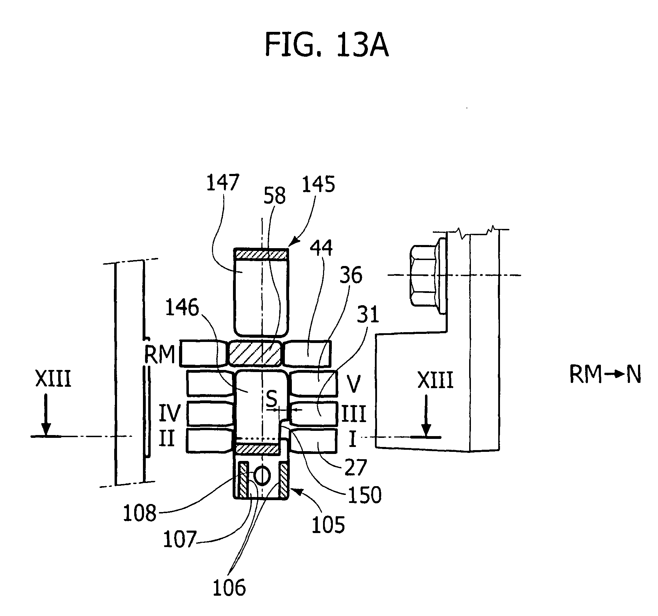

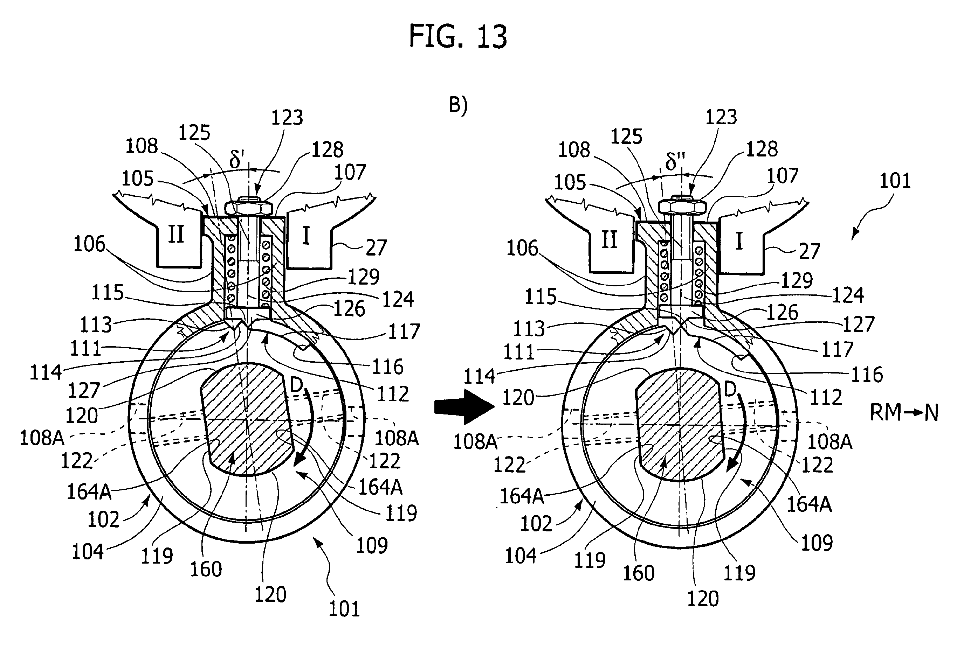

With reference to figure 13, an operation of disengagement of the reverse gear and return to the conditions of engagement in the recess 111 of the coupling element 123 will now be described.

The disengagement of the reverse gear by means of a rotation in a direction D, opposite to the direction E, of the control shaft 160, controlled by the first control element 73. In the first instants of such rotation, no force is exerted onto the coupling element 123 and onto the external annular element 102, because the prismatic relief 127 moves on the cylindrical surface portion 117 without any circumferential constraint that would give origin to an exchange of forces.

In the continuance of the rotation in the direction D, the internal annular element 109 takes an angular position such that the side 115 comes into contact with the prismatic relief 127. In such condition, a force transmission between the side 115 and the prismatic relief 127 activates when the angular displacement between the element 109 and the element 102 is equivalent to an angle δ'. It should be observed that, while the external annular element 102 has an orientation identical to that taken initially in neutral position, element 109 is still rotated due to its connection in rotation with the control shaft 160, so the angle δ' has the meaning of an advance angle with respect to the neutral position of the hub 101in which the exchange of forces between the element 102 and the element 109 is restored.

Such exchange of forces generates a momentum on the external annular element 102 which would tend to bring it in rotation in the direction D. However, in order for the external annular element 102 to be drawn in rotation it is necessary that the movement thereof be followed by a corresponding movement of the fork-shaped end 27 in a direction that would cause the engagement of the first gear.

However, such movement is prevented because the portion of fork-shaped end 27 associated to the second gear cannot move in the direction of engagement of the first gear due to the absence of a recess analogous to the recess 150. In fact, any rotational movement in the direction D of the external annular element 102 is now prevented by the finger 146, which blocks the fork-shaped end 27.

In such condition, corresponding to an angular displacement δ", the prismatic relief 127 surpasses the side 115 of the recess 112 and once again engages the recess 111, whose shape guarantees a rigid rotational connection between the internal annular element 109 and the external annular element 102, thus between the finger 105 and the control shaft 160.

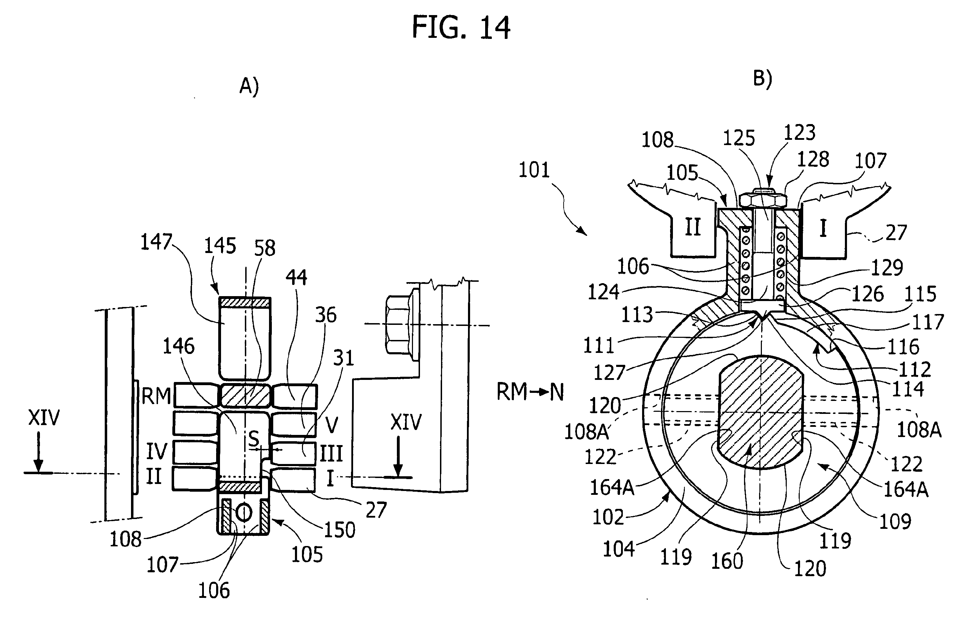

The attained end position is illustrated in figure 14 wherein in portion A the configuration of the device 100 is identical to that illustrated in figure 10, as well as the position of the second engagement hub 101.

It is thus clear that the coupling element 123 is disengageable to sequentially enable and disable a rigid connection in rotation between the finger 105 and the control shaft 160 only when the radial relief 58 is engaged in the actuation element 41 and the finger 105 is engaged in the actuation element 26.

Substantially, at the end of an operation of disengagement of the reverse gear, the second engagement hub 101 is automatically returned to resting conditions, wherein a connection in rotation between the finger 105 and the control shaft 160 exists, and ready for a subsequent operation of engagement of the reverse gear.

The actuation device 100 according to the present invention may be installed on any gear of known type and possibly already under mass production without any modification.

As a matter of fact, it shares almost the entirety of the components with the actuation device 1, and it does not require, contrary to the solutions discussed in the description of the prior art, any additional machining operations and/or modifications on the actuation elements of the gear-box 4.

It is thus clear that such features acquire particular value in the mass production context, given that it is possible, with considerable impact on costs, to obtain an actuation device capable of eliminating the engagement problems related to the engagement of the reverse gear without requiring redesigning or modifying the actuation elements of the gear-box 4.

Obviously, the construction details and the embodiments may be widely varied with respect to what has been described and illustrated without thereby departing from the scope of protection of the present invention, as defined by the appended claims.

## Claims

1. A device (100) for selecting and displacing actuation elements (26, 30, 35, 41) of a gearbox (4) for motor-vehicles comprising a plurality of forward gears (I, II, III, IV, V) and a reverse gear (RM) each associated to a respective actuation element (26, 30, 35, 41), the device (100) comprising:
- a selection mask (145) having a pair of fingers (146, 147) opposite and facing each other and a pair of through holes (148, 149) provided on said fingers (146, 147) and having coaxial axes defining a main axis (X6),
- a first engagement hub (56) inserted between said fingers (146, 147) in a manner coaxial to said through holes (148, 149), said first engagement hub (56) having a radial relief (58) arranged to engage with said actuation elements (26, 30, 35, 41) and being rotatable around said main axis (X6),
- a control shaft (160) inserted in said through holes (148, 149) and in said first engagement hub (56), said control shaft (160) being rotatable around said main axis (X6) and being axially movable therealong, said control shaft (160) being furthermore rotatably connected (57, 163) to said first engagement hub (56)
- a first control element (73) rotatably connected to said control shaft (160) and actuatable to cause a rotation of said first engagement hub (56) around said main axis (X6) to selectively move each actuation element (26, 30, 35, 41) towards an extreme position thereof,
- a second control element (75) operatively connected to said first engagement hub (56) and actuatable to translate said first engagement hub (56) and said selection mask (145) along said main axis (X6) for selecting the actuation element (26, 30, 35, 41) into which said radial relief (58) engages, and
- a second engagement hub (101) fitted on said control shaft (160) and adjacent to said selection mask (145), said second engagement hub (101) comprising a finger (105) arranged to engage in the actuation element (26; 27) of a forward gear (II) only when said first engagement hub (56) is translated to engage said radial relief (58) in the actuation element (41; 44) of said reverse gear (RM),
wherein said second engagement hub (101) comprises disengageable coupling means (123) arranged to sequentially enable and disable a rigid connection in rotation between said finger (105) of said second engagement hub (101) and said control shaft (160) when said finger (105) is engaged in said actuation element (26; 27) of said forward gear (II) and said first engagement hub (56) is rotated in a direction of engagement of said reverse gear (RM),
the device (100) being **characterised in that** said second engagement hub (101) comprises an external annular element (102) and an internal annular element (109),
wherein said external annular element (102) comprises said finger (105), and
wherein said finger (105) includes two guide sides (106) and a head (107) comprising a through hole (108),
wherein said internal annular element (109) is inserted in said external annular element (102) and comprises a first and a second recess (111, 112), wherein said first recess (111) has an angular extension smaller than said second recess (112).

2. The device (100) according to claim 1, **characterised in that** said first recess (111) comprises a pair of inclined and incident sides (113, 114) and **in that** said second recess (112) comprises two inclined sides (115, 116) separated by a cylindrical surface portion (117).

3. The device (100) according to claim 2, **characterised in that** said disengageable coupling means include a coupling element (123) comprising a stem (124) and a head (126) having a prismatic relief (127) whose shape is complementary to said first recess (111), said coupling element being arranged between said guide sides (106) in such a manner that said stem engages in said through hole (108) of the head (107) of said finger (105).

4. The device (100) according to claim 3, **characterised in that** said second engagement hub (101) comprises an elastic element (129) comprised between the head (126) of said coupling element (123) and the head (107) of said finger (105) and cooperating with said coupling element (123).

5. The device (100) according to claim 1, **characterised in that** said internal annular element (109) comprises a central through cavity (118) comprising two flat and parallel walls (119) and two opposite cylindrical walls (120).

6. The device (100) according to claim 1, **characterised in that** said selection mask (145) comprises a recess (150) provided on one of said fingers (146).

7. The device (100) according to claim 6, **characterised in that** said recess (150) is arranged to allow a movement of the actuation element (26) of said forward gear (II) in only one direction when the finger (105) of said second engagement hub is engaged in said actuation element (26), said only one direction being a direction of engagement of said forward gear (II).

8. The device (100) according to claim 1 or 7, **characterised in that** said forward gear is a second gear (II) of said gear-box (4).

9. The device (100) according to claim 7, **characterised in that** the fingers (146, 147) of said selection mask comprise ends separated by a distance (G) with dimensions corresponding to a thickness (P) of respective fork-shaped ends (27, 31, 36, 44) of said actuation elements (26, 30, 35, 41)

10. The device (100) according to claim 5, **characterised in that** said control shaft (160) comprises a first section (161), a second section (162) having a male splined coupling (163) arranged for the connection in rotation to said first engagement hub (56), and a third section (164), said third section (164) having a larger diameter with respect to said first section (161) and comprising two parallel and opposite flattenings (164A) arranged for coupling with said flat and parallel walls (119) of said internal annular element (109).

11. The device (100) according to claim 1, **characterised in that** said first control element is a lever (73) rotatably connected to said control shaft (160) around said main axis (X6).

12. The device (100) according to claim 1, **characterised in that** said second control element is a lever (75) rotatable around an axis (Z1) orthogonal to said main axis (X6) and rotatably connected by means of a pin (76A) to a lever (77), also rotating around said axis (Z1) orthogonal to said main axis (X6), said lever (77) having an end (78) with domed sides (79) arranged to be engaged between radial shoulders (59) of said first engagement hub (56).

## Patentansprüche

1. Vorrichtung (100) zum Wählen und Verschieben von Betätigungselementen (26, 30, 35, 41) eines Getriebes (4) für Kraftfahrzeuge, das eine Vielzahl von Vorwärtsgängen (I, II, III, IV, V) und einen Rückwärtsgang (RM) enthält, die jeweils einem entsprechenden Betätigungselement (26, 30, 35, 41) zugeordnet sind, wobei die Vorrichtung (100) enthält:
- eine Wählmaske (145), die zwei Finger (146, 147), die einander gegenüberliegen und einander zugewandt sind, und zwei Durchgangslöcher (148, 149) hat, die an den Fingern (146, 147) vorgesehen sind und koaxiale Achsen haben, die eine Hauptachse (X6) definieren,
- eine erste Eingreifnabe (56), die zwischen die Finger (146, 147) koaxial zu den Durchgangslöchern (148, 149) eingefügt ist, wobei die erste Eingreifnabe (56) einen radialen Vorsprung (58) hat, der so eingerichtet ist, dass er mit den Betätigungselementen (26, 30, 35, 41) in Eingriff gelangt und um die Hauptachse (X6) drehbar ist,
- eine Steuerwelle (160), die in die Durchgangslöcher (148, 149) und die erste Eingreifnabe (56) eingefügt ist, wobei die Steuerwelle (160) um die Hauptachse (X6) drehbar und entlang derselben axial beweglich ist, und die Steuerwelle (160) weiterhin mit der ersten Eingreifnabe (56) drehbar verbunden ist (57, 163),
- ein erstes Steuerelement (73), das mit der Steuerwelle (160) drehbar verbunden und ist und so betätigt werden kann, dass es eine Drehung der ersten Eingreifnabe (56) um die Hauptachse (X6) bewirkt, um jedes Betätigungselement (26, 30, 35, 41) wahlweise in einer extreme Stellung desselben zu bewegen,
- ein zweites Steuerelement (75), das mit der ersten Eingreifnabe (56) wirkungsmäßig verbunden ist und derart betätigt werden kann, dass es die erste Eingreifnabe (56) und die Wählmaske (145) entlang der Hauptachse (X6) verschiebt, um das Betätigungselement (26, 30, 35, 41) zu wählen, in das der radiale Vorsprung (58) eingreift, und
- eine zweite Eingreifnabe (101), die auf die Steuerwelle (160) gesteckt ist und der Wählmaske (145) benachbart ist, wobei die zweite Eingreifnabe (101) einen Finger (105) enthält, der dazu eingerichtet ist, in das Betätigungselement (26; 27) eines Vorwärtsganges (II) nur dann einzugreifen, wenn die erste Eingreifnabe (56) verschoben wird, um den radialen Vorsprung (58) mit dem Betätigungselement (41; 44) des Rückwärtsganges (RM) in Eingriff zu bringen,
wobei die zweite Eingreifnabe (101) lösbare Kupplungseinrichtungen (123) enthält, die dazu eingerichtet sind, sequentiell eine starre Verbindung bei Drehung zwischen dem Finger (105) der zweiten Eingreifnabe (101) und der Steuerwelle (160) einzurichten und zu lösen, wenn der Finger (105) mit dem ersten Betätigungselement (26; 27) des Vorwärtsganges (II) in Eingriff gebracht ist und die erste Eingreifnabe (56) in einer Eingreifrichtung des Rückwärtsganges (RM) gedreht wird,
wobei die Vorrichtung (100) **dadurch gekennzeichnet ist, dass** die zweite Eingreifnabe (101) ein Außenringelement (102) und ein Innenringelement (109) enthält,
das Außenringelement (102) den Finger (105) enthält,
der Finger (105) zwei Führungsseiten (106) und einen Kopf (107) enthält, der ein Durchgangsloch (108) aufweist, und
das Innenringelement (109) in das Außenringelement (102) eingefügt ist und eine erste sowie eine zweite Ausnehmung (111, 112) enthält, wobei die erste Ausnehmung (111) eine ringförmige Erweiterung hat, die kleiner ist als die zweite Ausnehmung (112).

2. Vorrichtung (100) nach Anspruch 1, **dadurch gekennzeichnet, dass** die erste Ausnehmung (111) zwei geneigte und einfallende Seiten (113, 114) enthält, und **dadurch**, dass die zweite Ausnehmung (112) zwei geneigte Seiten (115, 116) enthält, die durch einen zylindrischen Oberflächenabschnitt (117) getrennt sind.

3. Vorrichtung (100) nach Anspruch 2, **dadurch gekennzeichnet, dass** die lösbaren Kupplungseinrichtungen ein Kupplungselement (123) enthalten, das einen Schaft (124) und einen Kopf (126) umfasst, der einen prismatischen Vorsprung (127) aufweist, dessen Form komplementär zu der ersten Ausnehmung (111) ist, wobei das Kupplungselement zwischen den Führungsseiten (106) derart angeordnet ist, dass der Schaft in das Durchgangsloch (108) des Kopfes (107) des Fingers (105) eingreift.

4. Vorrichtung (100) nach Anspruch 3, **dadurch gekennzeichnet, dass** die zweite Eingreifnabe (101) ein elastisches Element (129) enthält, das zwischen dem Kopf (126) des Kopplungselementes (123) und dem Kopf (107) des Fingers (105) eingefügt ist und mit dem Kopplungselement (123) zusammenwirkt.

5. Vorrichtung (100) nach Anspruch 1, **dadurch gekennzeichnet, dass** das Innenringelement (109) eine zentrale Durchgangsaussparung (118) hat, die zwei flache und parallele Wände (119) und zwei gegenüberliegende, zylindrische Wände (120) hat.

6. Vorrichtung (100) nach Anspruch 1, **dadurch gekennzeichnet, dass** die Wählmaske (145) eine Ausnehmung (150) enthält, die an einem der Finger (146) vorgesehen ist.

7. Vorrichtung (100) nach Anspruch 6, **dadurch gekennzeichnet, dass** die Ausnehmung (150) dazu eingerichtet ist, eine Bewegung des Betätigungselementes (26) des Vorwärtsganges (II) in lediglich einer Richtung zu gestatten, wenn der Finger (105) der zweiten Eingreifnabe mit dem Betätigungselement (26) in Eingriff steht, wobei diese lediglich eine Richtung eine Eingreifrichtung des Vorwärtsganges (II) ist.

8. Vorrichtung (100) nach Anspruch 1 oder 7, **dadurch gekennzeichnet, dass** der Vorwärtsgang ein zweiter Gang (II) des Getriebes (4) ist.

9. Vorrichtung (100) nach Anspruch 7, **dadurch gekennzeichnet, dass** die Finger (146, 147) der Wählmaske Enden aufweisen, die um einen Abstand (G) mit Abmessungen entfernt sind, die einer Dicke (P) der entsprechenden gabelförmigen Enden (27, 31, 36, 44) der Betätigungselemente (26, 30, 35, 41) entsprechen.

10. Vorrichtung (100) nach Anspruch 5, **dadurch gekennzeichnet, dass** die Steuerwelle (160) einen ersten Abschnitt (161), einen zweiten Abschnitt (162), der eine Außenkerbverzahnung (163) aufweist, die für die Verbindung bei Drehung mit der ersten Eingreifnabe (56) eingerichtet ist, und einen dritten Abschnitt (164) enthält, wobei der dritte Abschnitt (164) einen größeren Durchmesser im Bezug auf den ersten Abschnitt (161) hat und zwei parallele sowie gegenüberliegende Abflachungen (164A) hat, die zu einer Kupplung mit den flachen und parallelen Wänden (119) des Innenringelementes (109) eingerichtet sind.

11. Vorrichtung (100) nach Anspruch 1, **dadurch gekennzeichnet, dass** das erste Steuerelement ein Hebel (73) ist, der mit der Steuerwelle (160) um die Hauptachse (X6) drehbar verbunden ist.

12. Vorrichtung (100) nach Anspruch 1, **dadurch gekennzeichnet, dass** das zweite Steuerelement ein Hebel (75) ist, der um eine Achse (Z1) orthogonal zu der Hauptachse (X6) drehbar ist und mit Hilfe eines Zapfens (76A) drehbar mit einem Hebel (77) verbunden ist, der sich ebenfalls um die Achse (Z1) orthogonal zu der Hauptachse (X6) dreht, wobei der Hebel (77) ein Ende (78) mit gewölbten Seiten (79) hat, die dazu eingerichtet sind, zwischen radiale Schultern (59) der ersten Eingreifnabe (56) einzugreifen.

## Revendications

1. Dispositif (100) pour sélectionner et déplacer des éléments d'actionnement (26, 30, 35, 41) d'une boîte de vitesses (4) pour des véhicules à moteur comprenant une pluralité de vitesses de marche avant (I, II, III, IV, V) et une vitesse de marche arrière (RM), chacune associée à un élément d'actionnement (26, 30, 35, 41) respectif, le dispositif (100) comprenant :
un masque de sélection (145) ayant une paire de doigts (146, 147) opposés et se faisant face, et une paire de trous de passage (148, 149) prévus sur lesdits doigts (146, 147) et ayant des axes coaxiaux définissant un axe principal (X6),
un premier moyeu de mise en prise (56) inséré entre lesdits doigts (146, 147) d'une manière coaxiale par rapport auxdits trous de passage (148, 149), ledit premier moyeu de mise en prise (56) ayant un relief radial (58) agencé pour se mettre en prise avec lesdits éléments d'actionnement (26, 30, 35, 41) et pouvant tourner autour dudit axe principal (X6),
un arbre de commande (160) inséré dans lesdits trous de passage (148, 149) et dans ledit premier moyeu de mise en prise (56), ledit arbre de commande (160) pouvant tourner autour dudit axe principal (X6) et pouvant se déplacer de manière mobile le long de ce dernier, ledit arbre de commande (160) étant en outre raccordé de manière rotative (57, 163) audit premier moyeu de mise en prise (56),
un premier élément de commande (73) raccordé de manière rotative audit arbre de commande (160) et pouvant fonctionner pour provoquer une rotation dudit premier moyeu de mise en prise (56) autour dudit axe principal (X6) afin de déplacer sélectivement chaque élément d'actionnement (26, 30, 35, 41) vers sa position extrême,
un deuxième élément de commande (75) raccordé de manière opérationnelle audit premier moyeu de mise en prise (56) et pouvant fonctionner pour faire effectuer un mouvement de translation audit premier moyeu de mise en prise (56) et audit masque de sélection (145) le long dudit axe principal (X6) pour sélectionner l'élément d'actionnement (26, 30, 35, 41) dans lequel ledit relief radial (58) se met en prise, et
un deuxième moyeu de mise en prise (101) monté sur ledit arbre de commande (160) et adjacent audit masque de sélection (145), ledit deuxième moyeu (101) comprenant un doigt (105) agencé pour se mettre en prise dans l'élément d'actionnement (26 ; 27) d'une vitesse de marche avant (II) uniquement lorsque ledit premier moyeu de mise en prise (56) a effectué un mouvement de translation pour mettre en prise ledit relief radial (58) dans l'élément d'actionnement (41 ; 44) de ladite vitesse de marche arrière (RM),
dans lequel ledit deuxième moyeu de mise en prise (101) comprend des moyens de couplage pouvant être dégagés (123) agencés pour permettre et interdire séquentiellement un raccordement rigide en rotation entre ledit doigt (105) dudit deuxième moyeu de mise en prise (101) et ledit arbre de commande (160) lorsque ledit doigt (105) est mis en prise dans ledit élément d'actionnement (26 ; 27) de ladite vitesse de marche avant (II) et ledit premier moyeu de mise en prise (56) est entraîné en rotation dans une direction de mise en prise de ladite vitesse de marche arrière (RM),
le dispositif (100) étant **caractérisé en ce que** ledit deuxième moyeu de mise en prise (101) comprend un élément annulaire externe (102) et un élément annulaire interne (109),
dans lequel ledit élément annulaire externe (102) comprend ledit doigt (105), et
dans lequel ledit doigt (105) comprend deux côtés de guidage (106) et une tête (107) comprenant un trou de passage (108),
dans lequel ledit élément annulaire interne (109) est inséré dans ledit élément annulaire externe (102) et comprend un premier et un deuxième évidement (111, 112), dans lequel ledit premier évidement (111) a une extension annulaire plus petite que ledit deuxième évidement (112).

2. Dispositif (100) selon la revendication 1, **caractérisé en ce que** ledit premier évidement (111) comprend une paire de côtés inclinés et incidents (113, 114) et **en ce que** ledit deuxième évidement (112) comprend deux côtés inclinés (115, 116) séparés par une partie de surface cylindrique (117).

3. Dispositif (100) selon la revendication 2, **caractérisé en ce que** lesdits moyens de couplage pouvant être dégagés comprennent un élément de couplage (123) comprenant une tige (124) et une tête (126) ayant un relief prismatique (127) dont la forme est complémentaire dudit premier évidement (111), ledit élément de couplage étant agencé entre lesdits côtés de guidage (106) de sorte que ladite tige se met en prise dans ledit trou de passage (108) de la tête (107) dudit doigt (105).

4. Dispositif (100) selon la revendication 3, **caractérisé en ce que** ledit deuxième moyeu de mise en prise (101) comprend un élément élastique (129) compris entre la tête (126) dudit élément de couplage (123) et la tête (107) dudit doigt (105) et coopérant avec ledit élément de couplage (123).

5. Dispositif (100) selon la revendication 1, **caractérisé en ce que** ledit élément annulaire interne (109) comprend une cavité de passage centrale (118) comprenant deux parois plates et parallèles (119) et deux parois cylindriques opposées (120).

6. Dispositif (100) selon la revendication 1, **caractérisé en ce que** ledit masque de sélection (145) comprend un évidement (150) prévu sur l'un desdits doigts (146).

7. Dispositif (100) selon la revendication 6, **caractérisé en ce que** ledit évidement (150) est agencé pour permettre un mouvement de l'élément d'actionnement (26) de ladite vitesse de marche avant (II) uniquement dans une direction lorsque le doigt (105) dudit deuxième moyeu de mise en prise est mis en prise dans ledit élément d'actionnement (26), ladite uniquement une direction étant une direction de mise en prise de ladite vitesse de marche avant (II).

8. Dispositif (100) selon la revendication 1 ou 7, **caractérisé en ce que** ladite vitesse avant est une deuxième vitesse (II) de ladite boîte de vitesses (4).

9. Dispositif (100) selon la revendication 7, **caractérisé en ce que** les doigts (146, 147) dudit masque de sélection comprennent des extrémités séparées par une distance (G) avec des dimensions correspondant à une épaisseur (P) des extrémités en forme de fourche (27, 31, 36, 44) respectives desdits éléments d'actionnement (26, 30, 35, 41).

10. Dispositif (100) selon la revendication 5, **caractérisé en ce que** ledit arbre de commande (160) comprend une première section (161), une deuxième section (162) ayant un couplage cannelé mâle (163) agencé pour se raccorder en rotation audit premier moyeu de mise en prise (56), et une troisième section (164), ladite troisième section (164) ayant un plus grand diamètre par rapport à ladite première section (161) et comprenant deux aplanissements parallèles opposés (164A) agencés pour se coupler avec lesdites parois plates et parallèles (119) dudit élément annulaire interne (109).

11. Dispositif (100) selon la revendication 1, **caractérisé en ce que** ledit premier élément de commande est un levier (73) raccordé de manière rotative audit arbre de commande (160) autour dudit axe principal (X6).

12. Dispositif (100) selon la revendication 1, **caractérisé en ce que** ledit deuxième élément de commande est un levier (75) pouvant tourner autour d'un axe (Z1) orthogonal par rapport audit axe principal (X6) et raccordé de manière rotative au moyen d'une broche (76A) à un levier (77), tournant également autour dudit axe (Z1) orthogonal par rapport audit axe principal (X6), ledit levier (77) ayant une extrémité (78) avec des côtés en forme de dôme (79) agencés pour être mis en prise entre des épaulements radiaux (59) dudit premier moyeu de mise en prise (56).
